(19) Europäisches Patentamt
European Patent Office
Office européen des brevets

(11) Veröffentlichungsnummer: **0 007 500**
**B1**

(12) # EUROPÄISCHE PATENTSCHRIFT

(45) Veröffentlichungstag der Patentschrift: **26.08.81**

(51) Int. Cl.³: **C 07 F 9/24,** A 01 N 57/28

(21) Anmeldenummer: **79102328.6**

(22) Anmeldetag: **09.07.79**

(54) **O-Äthyl-S-n-propyl-N-aminomethyliden-thiolphosphorsäurediesterimide, Verfahren zu ihrer Herstellung und ihre Verwendung als Schädlingsbekämpfungsmittel.**

(30) Priorität: **20.07.78 DE 2831934**

(43) Veröffentlichungstag der Anmeldung: **06.02.80 Patentblatt 80/3**

(45) Bekanntmachung des Hinweises auf die Patenterteilung: **26.08.81 Patentblatt 81/34**

(84) Benannte Vertragsstaaten: **BE CH DE FR GB IT NL**

(56) Entgegenhaltungen:
**BE-A 862 891**
**DE-A-2 261 230**
**FR-A-2 175 224**

(73) Patentinhaber: **BAYER AG, Zentralbereich Patente, Marken und Lizenzen, D-5090 Leverkusen 1, Bayerwerk (DE)**

(72) Erfinder: **Hoffmann, Hellmut, Prof. Dr., Tersteegenweg 17, D-5600 Wuppertal 1 (DE)**
Erfinder: **Hammann, Ingeborg, Dr., Belfortstrasse 9, D-5000 Köln 1 (DE)**
Erfinder: **Homeyer, Bernhard, Dr., Obere Strasse 28, D-5090 Leverkusen 3 (DE)**

**EP 0 007 500 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# O-Äthyl-S-n-propyl-N-aminomethyliden-thiolphosphor-säurediesterimide, Verfahren zu ihrer Herstellung und ihre Verwendung als Schädlingsbekämpfungsmittel

Die Erfindung betrifft neue O-Äthyl-S-n-propyl- N -aminomethyliden-thiolphosphorsäurediesterimide, ein Verfahren zu ihrer Herstellung sowie ihre Verwendung als Schädlingsbekämpfungsmittel, insbesondere als Insektizide, Akarizide und Nematizide.

Es ist bekannt, dass O,S-Dialkyl-N-acetyl-thiolphosphor-säureesteramide, wie z.B. O-Methyl- bzw. O-Äthyl-S-methyl-N-acetyl-thiolphosphorsäureesteramid, insektizide und akarizide Eigenschaften haben (vergleiche DE-OS 2 014 027).

Ebenso ist bekannt, dass O,S-Dialkyl-N-aminomethyliden-thiolphosphorsäurediesterimide, insbesondere O,S-Dimethyl-N-aminomethyliden-thiolphosphorsäurediesterimide, wie z.B. O,S-Dimethyl-N-(N-pyridin(2)yl-aminomethyliden)-thiolphosphorsäurediesterimid, insektizid und akarizid wirksam sind (vergleiche DE-OS 2 211 338). Die Wirkung dieser Verbindungen ist jedoch, insbesondere bei niedrigen Konzentrationen und Aufwandmengen, nicht immer zufriedenstellend.

Es wurden nun die neuen O-Äthyl-S-n-propyl-N-aminomethyliden-thiolphosphorsäurediesterimide der Formel

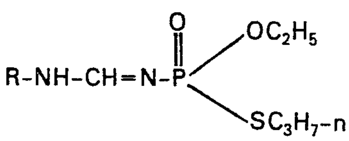

(I)

in welcher
R für Alkyl steht,
gefunden.

Diese neuen Verbindungen zeichnen sich durch hohe insektizide,akarizide und neumatizide Wirksamkeit aus.

Weiter wurde gefunden, dass man die neuen O-Äthyl-S-n-propyl-N-aminomethyliden-thiolphosphorsäurediesterimide der Formel (I) erhält, wenn man O-Äthyl-S-n-propyl-N-alkoxymethyliden-thiolphosphorsäurediesterimide der Formel

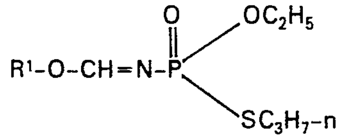

(II)

in welcher
$R^1$ für niederes Alkyl steht,
mit Aminen der Formel

$R-NH_2$ (III)

in welcher
R die oben angegebene Bedeutung hat, gegebenenfalls in Gegenwart eines Verdünnungsmittels umsetzt.

Überraschenderweise zeigen die erfindungsgemässen O-Äthyl-S-n-propyl-N-aminomethyliden-thiolphosphorsäurediesterimide eine wesentlich bessere Wirkung bei der Schädlingsbekämpfung, insbesondere eine bessere insektizide, akarizide und nematizide Wirkung als die bekannten Verbindungen analoger Konstitution und gleicher Wirkungsrichtung.

Die erfindungsgemässen Produkte stellen somit eine wertvolle Bereicherung der Technik dar.

Verwendet man beispielsweise O-Äthyl-S-n-propyl-N-äthoxymethyliden-thiolphosphorsäurediesterimid und Methylamin als Ausgangsstoffe, so kann die Reaktion dieser Verbindungen durch folgendes Formelschema skizziert werden:

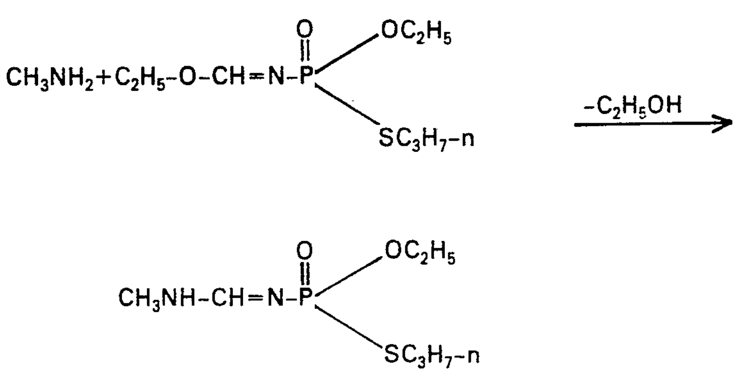


Die als Ausgangsstoffe zu verwendenden O-Äthyl-S-n-propyl-N-alkoxymethyliden-thiolphosphorsäurediesterimide sind durch Formel (II) definiert. Vorzugsweise steht darin
$R^1$ für Alkyl mit 1 bis 3 Kohlenstoffatomen, insbesondere für Methyl oder Äthyl.

Als Beispiele seien im einzelnen genannt:
O-Äthyl-S-n-propyl-N-methoxymethyliden- und
O-Äthyl-S-n-propyl-N-äthoxymethyliden-thiolphosphorsäurediesterimid.

Die Ausgangsverbindungen der Formel (II) sind

neu. Man erhält sie nach einem bekannten Verfahren durch Umsetzung von O-Äthyl-S-n-propyl-thiolphosphorsäurediesteramid mit ortho-Ameisensäureestern bei Temperaturen zwischen 100 und 200°C, gegebenenfalls in Gegenwart eines Katalysators wie z.B. p-Toluolsulfonsäure (vergleiche DE-OS 2 116 690).

O-Äthyl-S-n-propyl-thiolphosphorsäurediesteramid kann aus dem bekannten O-Äthylthiolphosphorsäureesteramid oder dessen Alkalisalzen durch Umsetzung mit 1-Brompropan, gegebenenfalls in Gegenwart eines Verdünnungsmittels, wie z.B. Äthanol, bei Temperaturen zwischen 20 und 100°C, hergestellt werden.

Die weiter als Ausgangsverbindungen zu verwendenden ortho-Ameisensäureester sind bekannt.

Die als Ausgangsstoffe zu verwendenden Amine sind durch Formel (III) definiert. Vorzugsweise steht darin
R für geradkettiges oder verzweigtes Alkyl mit 1 bis 5, insbesondere mit 1 bis 3 Kohlenstoffatomen.

Als Beispiele seien genannt:
Methylamin, Äthylamin, n-Propylamin und iso-Propylamin.

Die Amine der Formel (III) sind bekannte Verbindungen.

Das Verfahren zur Herstellung der neuen O-Äthyl-S-n-propyl-N-aminomethyliden-thiolphosphorsäurediesterimide (I) wird im allgemeinen unter Verwendung von Verdünnungsmitteln durchgeführt. Als solche kommen praktisch alle inerten Solventien in Frage. Vorzugsweise werden Alkohole, wie z.B. Methanol oder Äthanol, verwendet.

Die Reaktionstemperatur kann innerhalb eines grösseren Bereiches variiert werden. Im allgemeinen arbeitet man bei Temperaturen zwischen −10 und +100°C, vorzugsweise zwischen 0 und 50°C. Die Umsetzung wird im allgemeinen bei Normaldruck durchgeführt.

Bei der Durchführung des erfindungsgemässen Verfahrens setzt man auf 1 Mol O-Äthyl-S-n-propyl-N-alkoxymethyliden-thiolphosphorsäurediesterimid 1 bis 2 Mol Amin ein. Das Amin wird im allgemeinen in einem Verdünnungsmittel vorgelegt und unter Eiskühlung mit dem O-Äthyl-S-n-propyl-N-alkoxymethyliden-thiolphosphorsäurediesterimid versetzt, dann wird das Reaktionsgemisch mehrere Stunden bei Raumtemperatur gerührt. Anschliessend werden die flüchtigen Anteile des Reaktionsgemisches im Vakuum abdestilliert.

Die neuen Verbindungen fallen in Form von Ölen an, die sich nicht unzersetzt destillieren lassen, jedoch durch sogenanntes «Andestillieren», d.h. durch längeres Erhitzen unter vermindertem Druck auf mässig erhöhte Temperaturen von den letzten flüchtigen Anteilen befreit werden. Zu ihrer Charakterisierung dient der Brechungsindex.

Die neuen O-Äthyl-S-n-propyl-N-aminomethyliden-thiolphosphorsäurediesterimide (I) zeichnen sich durch eine hervorragende Wirkung bei der Schädlingsbekämpfung, insbesondere aber insektizide, akarizide und nematizide Wirkung aus. Sie besitzen auch eine gute wurzelsystemische Wirkung gegen saugende und fressende Insekten und Milben. Die neuen Verbindungen können daher mit Erfolg im Pflanzenschutz zur Bekämpfung tierischer Schädlinge eingesetzt werden.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophaus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp.
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips fermoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen

zwischen 0,1 und 95 Gewichtsprozent Wirkstoff, vorzugsweise zwischen 0,5 und 90%.

Die Anwendung der erfindungsgemässen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Anwendung der erfindungsgemässen Wirkstoffe geschieht im Veterinärsektor in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgiessens (pour-on and spot-on) und des Einpuders sowie durch parenterale Anwendung in Form beispielsweise der Injektion.

Beispiel A

Grenzkonzentrations-Rest/Wurzelsystemische Wirkung

Testinsekt: Phaedon cochleariae-Larven
Lösungsmittel: 3 Gewichtsanteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschliesslich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigen z.B. die folgenden Verbindungen der Herstellungsbeispiele überlegene Wirkung gegenüber dem Stand der Technik: 1 und 2

Beispiel B

Grenzkonzentrations-Test/Wurzelsystemische Wirkung

Testinsekt: Myzus persicae
Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschliesslich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100%, wenn alle Testtiere abgetötet sind und 0%, wenn noch genau so viele Testinsekten leben wie bei der unbehandelten Kontrolle.

Bei diesem Test zeigen z.B. die folgenden Verbindungen der Herstellungsbeispiele überlegene Wirkung gegenüber dem Stand der Technik: 1 und 2

Beispiel C

Grenzkonzentrations-Test/Nematoden

Testnematode: Meloidogyne incognita
Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100%, wenn der Befall vollständig vermieden wird, er ist 0%, wenn der Befall genau so hoch ist wie bei den Kontrollpflanzen in unbehandeltem, aber in gleicher Weise verseuchtem Boden.

Bei diesem Test zeigen z.B. die folgenden Verbindungen der Herstellungsbeispiele überlegene Wirksamkeit gegenüber dem Stand der Technik: 1 und 2

Beispiel D

Tetranychus-Test (resistent)

Lösungsmittel: 3 Gewichtsteile Aceton
Emulgator: 1 Gewichtsteil Alkylarylpolyglykoläther

Zur Herstelung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100%, dass alle Spinnmilben abgetötet wurden; 0% bedeutet, dass keine Spinnmilben abgetötet wurden.

Bei diesem Test zeigen z.B. die folgenden Verbindungen der Herstellungsbeispiele überlegene Wirksamkeit gegenüber dem Stand der Technik: 1 und 2

Beispiel E

Phaedon-Larven-Test

Lösungsmittel: 3 Gewichtsteile Aceton
Emulgator: 1 Gewichtsteil Alkylarylpolyglykoläther

Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100%, dass alle Käfer-Larven abgetötet wurden; 0% bedeutet, dass keine Käfer-Larven abgetötet wurden.

Bei diesem Test zeigen z.B. die folgenden Verbindungen der Herstellungsbeispiele überlegene Wirksamkeit gegenüber dem Stand der Technik: 1 und 2

Herstellungsbeispiele

Beispiel 1:

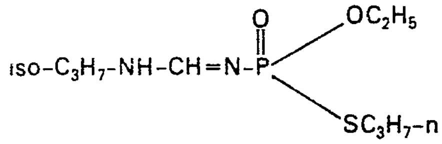

In eine Lösung von 40 g (0,66 Mol) iso-Propylamin in 250 ml Äthanol lässt man unter Rühren bei 0 bis 5°C innerhalb von 30 Minuten 120 g (0,5 Mol) O-Äthyl-S-n-propyl-N-äthoxymethylidenthiolphosphorsäurediesterimid einlaufen, wobei eine exotherme Reaktion zu beachten ist. Die Reaktionsmischung wird drei Stunden bei 20 bis 25°C gerührt. Leichter flüchtige Komponenten werden dann im Wasserstrahlvakuum abdestilliert und das zurückbleibende Produkt wird durch Andestillieren im Hochvakuum gereinigt. Man erhält 119 g (94% der Theorie) O-Äthyl-S-n-propyl-N-iso-propylamino-methyliden-thiolphosphorsäurediesterimid.

Brechungsindex: $n_D^{26} = 1,4940$.

Beispiel 2:

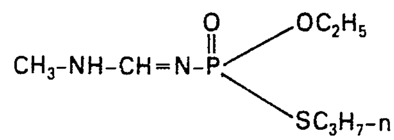

Bei Verwendung von 120 g (0,5 Mol) O-Äthyl-S-n-propyl-n-äthoxymethyliden-thiolphosphorsäurediesterimid, 30 g (1 Mol) Methylamin und 250 ml Methanol erhält man analog Beispiel 1 95 g (85% der Theorie) O-Äthyl-S-n-propyl-N-methylamino-methyliden-thiolphosphorsäurediesterimid.

Brechungsindex: $n_D^{26} = 1,4927$.

Das als Ausgangsverbindung einzusetzende O-Äthyl-S-n-propyl-N-äthoxymethyliden-thiolphosphorsäurediesterimid kann wie folgt hergestellt werden:

a) 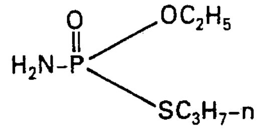

Eine Lösung von 272 g (1,5 Mol) O-Äthyl-thiolphosphorsäureesteramid-hydrat-Natriumsalz in 600 ml Äthanol wird mit 185 g (1,5 Mol) 1-Brompropan versetzt und unter Rühren vier Stunden lang unter Rückfluss zum Sieden erhitzt. Das Reaktionsgemisch wird am Rotationsverdampfer eingeengt und der Rückstand in kaltem Wasser gelöst. Man extrahiert dreimal mit je 300 ml Chloroform, vereinigt die Chloroformauszüge, trocknet und destilliert das Chloroform im Wasserstrahlvakuum ab. Das zurückbleibende Produkt wird durch Andestillieren im Hochvakuum gereinigt. Man erhält 231 g (84% der Theorie) O-Äthyl-S-n-propyl-thiolphosphorsäurediesteramid.
Brechungsindex: $n_D^{26} = 1,4930$.

b) 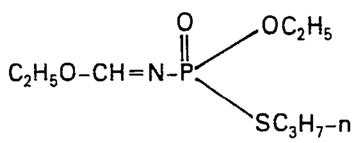

95 g (0,5 Mol) O-Äthyl-S-n-propyl-thiolphosphorsäurediesteramid, 100 g (0,66 Mol) ortho-Ameisensäuretriäthylester und 4 g p-Toluolsulfonsäure werden unter Rühren erhitzt, bis eine Badtemperatur von ca. 150°C erreicht ist. Der als Nebenprodukt gebildete Alkohol wird im Verlaufe der Reaktion über eine 10-cm-Vigreux-Kolonne abdestilliert. Nach Erreichen einer Innentemperatur von ca. 130°C wird das im Kolben verbliebene Rohprodukt durch Hochvakuumdestillation gereinigt. Man erhält 100 g (83% der Theorie) O-Äthyl-S-n-propyl-N-äthoxy-methyliden-thiolphosphorsäurediesterimid.
Siedepunkt: 92°C/0,01 Torr.

**Patentansprüche**

1. O-Äthyl-S-n-propyl-N-amino-methyliden-thiolphosphor-säurediesterimide der Formel

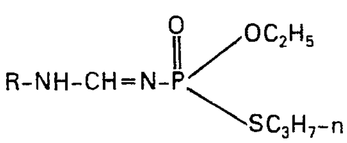 (I)

in welcher R für Alkyl steht.

2. Verfahren zur Herstellung von O-Äthyl-S-n-propyl-N-aminomethyliden-thiolphosphorsäurediesterimiden der Formel

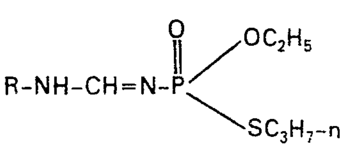 (I)

in welcher R für Alkyl steht, dadurch gekennzeichnet, dass man O-Äthyl-S-n-propyl-N-alkoxymethyliden-thiolphosphorsäurediesterimide der Formel

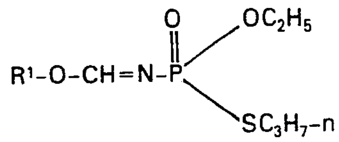 (II)

in welcher $R^1$ für niederes Alkyl steht, mit Aminen der Formel

$R-NH_2$ (III)

in welcher R die oben angegebene Bedeutung hat, gegebenenfalls in Gegenwart eines Verdünnungsmittels umsetzt.

3. Schädlingsbekämpfungsmittel, gekennzeichnet durch einen Gehalt an Verbindungen gemäss Formel I.

4. Insektizide, akarizide und nematizide Mittel nach Anspruch 3, gekennzeichnet durch einen Gehalt an Verbindungen gemäss Formel I.

5. Verwendung von Verbindungen gemäss Formel I zur Bekämpfung von Schädlingen.

6. Verfahren zur Herstellung von insektiziden, akariziden und nematiziden Mitteln, dadurch gekennzeichnet, dass man Verbindungen gemäss Formel I mit Streckmitteln und/oder oberflächenaktiven Mitteln mischt.

**Revendications**

1. Des N-amino-méthylidène-imides du diester de O-éthyle et S-n-propyle de l'acide thiolphosphorique de formule:

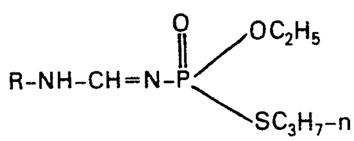 (I)

dans laquelle R est un groupe alkyle.

2. Procédé de production de N-aminométhylidène-imides du diester de O-éthyle et de S-n-propyle de l'acide thiolphosphorique de formule:

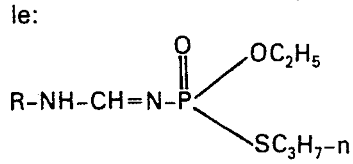 (I)

dans laquelle R est un groupe alkyle, caractérisé en ce qu'on fait réagir des N-alkoxyméthylidène-imides du diester de O-éthyle et de S-n-propyle de l'acide thiolphosphorique de formule:

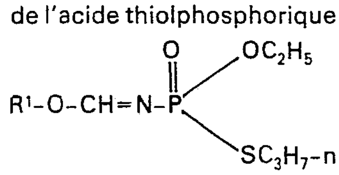 (II)

dans laquelle $R^1$ est un groupe alkyle inférieur, avec des amines de formule:

$R-NH_2$ (III)

dans laquelle R a la définition indiquée ci-dessus, éventuellement en présence d'un diluant.

3. Compositions pesticides, caractérisées par une teneur en composés de formule I.

4. Compositions insecticides, acaricides et nématicides suivant la revendication 3, caractérisées par une teneur en composés de formule I.

5. Utilisation de composés de formule I pour la lutte contre des parasites.

6. Procédé de production de compositions insecticides, acaricides et nématicides, caractérisé en ce qu'on mélange des composés de formule I avec des diluants et/ou des agents tensio-actifs.

**Patent Claims**

1. O-Ethyl-S-n-propyl-N-aminomethylidene-thiolphosphoric acid diester-imides of the formula

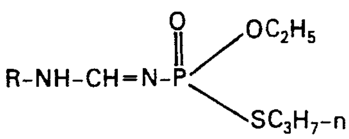

(I)

in which R represents alkyl.

2. Process for the preparation of O-ethyl-S-n-propyl-N-aminomethylidene-thiolphosphoric acid diester-imides of the formula

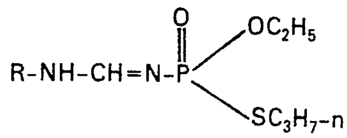

(I)

in which R represents alkyl, characterised in that O-ethyl-S-n-propyl-N-alkoxymethylidene-thiolphosphoric acid diester-imides of the formula

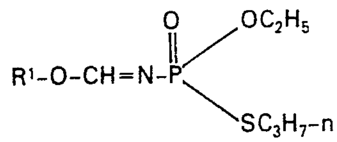

(II)

in which $R^1$ represents lower alkyl, are reacted with amines of the formula

$R-NH_2$ (III)

in which R has the meaning indicated above, if appropriate in the presence of a diluent.

3. Agents for combating pests, characterised in that they contain compounds according to formula I.

4. Insecticidal, acaricidal and nematicidal agents according to Claim 3, characterised in that they contain compounds according to formula I.

5. Use of compounds according to formula I for combating pests.

6. Process for the preparation of insecticidal, acaricidal and nematicidal agents, characterised in that compounds according to formula I are mixed with extenders and/or surface-active agents.